# FASCICULE DE BREVET EUROPEEN

(11) **EP 1 261 187 B1**
(45) Date de publication et mention de la délivrance du brevet: **02.11.2006**
(21) Numéro de dépôt: 02291215.8
(22) Date de dépôt: 16.05.2002
(51) Int. Cl.: H04M 3/424

(54) **Système de connexion de premier et second équipements informatiques à travers un réseau de télécommunication**
System zur Verbindung eines ersten und eines zweiten Rechnersystems über ein Telekommunikationsnetzwerk
System for connecting a first and second computer equipments through a telecommunications network

(30) Priorité: 21.05.2001 FR 0106671
(43) Date de publication de la demande: 27.11.2002
(73) Titulaire: FRANCE TELECOM, 75015 Paris (FR)
(72) Inventeur: Noblot, Thierry, 57360 Amneville (FR); Aime, Daniel, 25000 Besancon (FR); Gachenot, Marcel, 57070 Vantoux (FR); Tourne, Katherine, 57685 Augny (FR)
(74) Mandataire: Habasque, Etienne J. Jean-François

(56) Documents cités:
- EP-A- 0 581 528
- EP-A- 0 690 365

## Description

La présente invention concerne un système de connexion de premier et second équipements informatiques à travers un réseau de télécommunication.

Ces équipements sont par exemple formés par des micro-ordinateurs ou des serveurs d'accès distants à des systèmes d'information qui sont par exemple équipés de modems auxquels sont associés des numéros de téléphone.

Ces modems peuvent par exemple être des modems sécurisés qui intègrent une combinaison formée par exemple par une clé paramétrable qui doit être identique pour les deux modems intégrés dans les deux équipements pour permettre la connexion de ceux-ci.

Mais ces modems sécurisés présentent un certain nombre d'inconvénients notamment au niveau de leur coût, du fait qu'il n'existe pas de modem sécurisé pour les micro-ordinateurs portables de type PCMCIA, ni pour les téléphones portables, des difficultés liées à leur mise en oeuvre dans la mesure où il faut paramétrer le modem pour chaque équipement appelant en indiquant le numéro de rappel qui sera unique par rapport au modem de l'équipement appelant et des possibilités de piratage en utilisant un modem de type identique et un générateur de clé.

Il existe également dans l'état de la technique, des services de rappel automatique d'un logiciel de prise en main à distance d'un équipement informatique comme par exemple un logiciel de type « PC ANYWHERE ».

Ce type de logiciel est assez sécurisé mais il ne permet que de prendre la main sur un équipement informatique. En fait, il ne permet qu'une seule connexion à la fois sur un serveur ou un équipement quelconque disposé par exemple dans une entreprise.

Un autre service est également bien connu dans l'état de la technique, à savoir le service RAS (« Remote Accès Service »). La plupart des systèmes d'exploitation des serveurs d'accès distants intègrent cette fonctionnalité.

Ce service permet à un utilisateur possédant par exemple un micro-ordinateur muni d'un modem, de composer le numéro d'appel d'un serveur d'accès distant RAS. Cette numérotation ne peut se faire qu'à partir du micro-ordinateur relié à un poste téléphonique fixe ou mobile.

Le serveur RAS reçoit alors l'appel et décroche la ligne.

Ceci présente déjà un premier inconvénient dans la mesure où le fait de décrocher la ligne provoque le paiement de la communication par l'utilisateur.

Ensuite, le serveur et le micro-ordinateur échangent des informations d'identification, telles que par exemple une information d'enregistrement de type « LOGIN » et un mot de passe de connexion pour définir les privilèges d'accès au reste du système d'information ainsi que le numéro de téléphone pour le rappel de l'utilisateur.

Cet échange doit se faire en un temps déterminé ou avec un nombre de tentatives maximum.

Si ce temps est écoulé ou si ce nombre de tentatives maximum est atteint, la communication est coupée par le serveur.

C'est durant cette phase qu'un piratage peut s'opérer par usurpation d'identité ou intrusion dans le serveur.

En effet, un tel système peut être piraté car il y a connexion entre le serveur et l'utilisateur et certains logiciels de piratage peuvent entrer et modifier les propriétés du serveur RAS pour ensuite faire de l'intrusion dans le système d'information proprement dit.

Il n'y a en effet dans ce cas aucune certitude sur l'origine de l'utilisateur qui appelle le serveur RAS.

Le système reste alors ouvert à l'appel de n'importe quel utilisateur, car dans tous les cas, le serveur RAS décroche la ligne et donne l'invitation à la connexion d'utilisateur.

Une fois que les différentes informations d'identification ont été déclarées valides, à partir par exemple d'une base de données et que l'attribution des droits d'accès et du numéro téléphonique de rappel définis dans cette base pour l'utilisateur a été réalisée , la connexion se poursuit. Le serveur RAS raccroche la ligne et le micro-ordinateur de l'utilisateur se met en attente de réception d'un appel.

Le serveur d'accès distant RAS rappelle alors le micro-ordinateur de l'utilisateur qui reçoit l'appel et décroche la ligne, ce qui permet d'établir la connexion entre l'utilisateur et le système d'information.

A la vue de ce qui précède, on constate qu'une telle connexion n'est pas sécurisée et que le système d'information peut être piraté.

On connaît du document EP-A-0581 528 un système selon le préambule de la revendication 1.

Le but de l'invention est donc de résoudre ces problèmes.

A cet effet, l'invention a pour objet un système de connexion de premier et second équipements informatiques à travers un réseau de télécommunication, un numéro de téléphone étant affecté à chacun de ces équipements, ce système comportant des premiers moyens d'appel du second équipement, auxquels est affecté un numéro de téléphone, et le second équipement comporte des moyens de récupération du numéro de téléphone affecté aux premiers moyens d'appel sans décrocher la ligne, le second équipement comportant en outre des moyens d'identification des premiers moyens d'appel et de récupération dans une base de données d'un numéro de téléphone préenregistré dans celle-ci et affecté au premier équipement et des seconds moyens d'appel du premier équipement par ce numéro à travers le réseau de télécommunication, pour permettre la connexion, caractérisé en ce que les premiers moyens d'appel sont formés par un équipement téléphonique distinct du premier équipement et raccordé au réseau téléphonique.

L'invention sera mieux comprise à la lecture de la description qui va suivre, donnée uniquement à titre d'exemple et faite en se référant aux dessins annexés, sur lesquels :

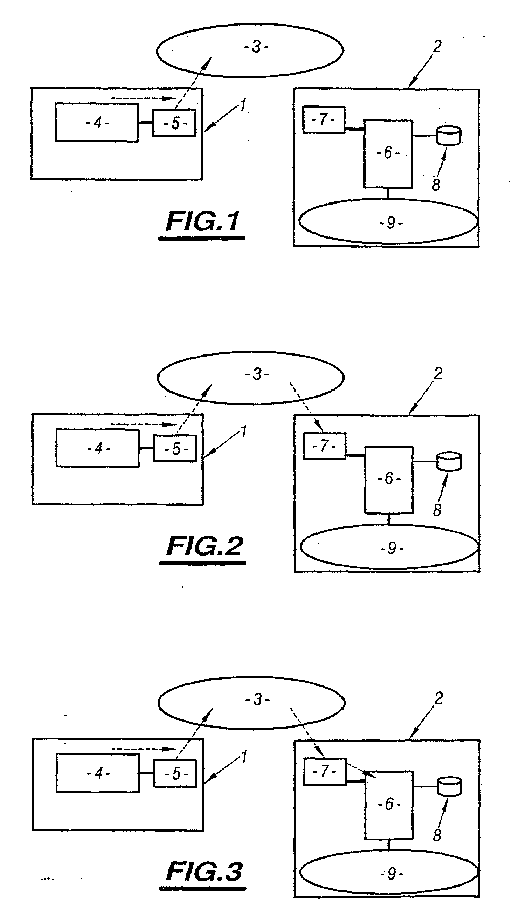

- les Figs. 1 à 12 représentent des schémas synoptiques d'un système de connexion selon l'invention, illustrant d'une part, la structure générale de celui-ci et d'autre part, son fonctionnement.

Comme cela a été indiqué précédemment, l'invention se rapporte à un système de connexion des premier et second équipements informatiques à travers un réseau de télécommunication, un numéro de téléphone étant affecté à chacun de ces équipements.

Les équipements informatiques peuvent être de différents types et natures et dans l'exemple qui sera décrit par la suite, on a illustré la connexion d'un micro-ordinateur et d'un système d'information, par exemple d'une entreprise, à travers un serveur d'accès distant de type RAS.

C'est ainsi par exemple que sur ces figures, la référence générale 1 désigne le premier équipement, la référence générale 2, le second équipement et la référence générale 3, le réseau de télécommunication 3.

Un numéro de téléphone est affecté à chacun de ces équipements et est établi par l'opérateur du réseau de télécommunication.

Comme cela a été indiqué précédemment, le premier équipement peut par exemple comporter un micro-ordinateur désigné par la référence générale 4 associé à un modem désigné par la référence générale 5, raccordé au réseau de télécommunication.

Le second équipement peut quant à lui comporter un serveur d'accès distant d'authentification RAS désigné par la référence générale 6 associé à un modem désigné par la référence générale 7 et à une base de données désignée par la référence générale 8, qui sera décrite plus en détail par la suite.

Le modem 7 est également relié au réseau de télécommunication.

Ce serveur d'accès RAS permet par exemple d'avoir accès à un système d'information d'une entreprise, désigné par la référence générale 9 sur ces figures.

Le but du système décrit est donc de permettre à un micro-ordinateur d'accéder à travers un opérateur téléphonique et un réseau téléphonique à un système d'information par exemple d'entreprise, un réseau privé, un accès Internet, etc.., et ce de manière sécurisée afin de faciliter la télé-activité.

Pour cela, il convient de mettre en oeuvre une sécurité pour être sûr qu'un utilisateur non connu ne se connecte pas au système d'information.

Il convient donc d'empêcher toute usurpation d'identité d'un utilisateur afin d'empêcher toute intrusion du système d'information en vue d'un piratage.

Ceci est réalisé en mettant en oeuvre un traitement des numéros de téléphone de différents intervenants, chaque numéro de téléphone étant affecté par l'opérateur du réseau téléphonique et étant unique et propre à chaque intervenant raccordé au réseau, que ce soit en poste fixe ou mobile. Ce numéro ne peut en effet pas être falsifié par l'appelant ou tout au moins pas avant que l'équipement appelé n'ait décroché la ligne, car c'est l'opérateur du réseau téléphonique qui gère ces numéros et le réseau.

On va décrire ci-après un exemple de mise en oeuvre du système selon l'invention dans lequel un utilisateur qui souhaite avoir accès à un système d'information tel que le système 9, dispose du micro-ordinateur 4 associé au modem 5.

Lors de l'étape illustrée sur la figure 1, l'utilisateur déclenche la numérotation vers le serveur d'accès distant d'authentification 6.

Cette numérotation se fait dans l'exemple décrit à partir du micro-ordinateur 4.

D'autres exemples seront décrits pour faire apparaître que l'appel du serveur 6 peut également se faire par l'utilisateur à partir de moyens distincts de ce micro-ordinateur, comme par exemple à partir d'un poste téléphonique fixe ou mobile associé au.réseau téléphonique.

Comme cela est illustré sur la figure 2, cet appel est alors acheminé à travers le réseau de télécommunication 3 vers le serveur et plus particulièrement le modem 7 de celui-ci.

Le serveur d'authentification et plus particulièrement le modem associé à celui-ci reçoit alors cet appel, mais ne décroche pas la ligne. Ceci permet d'une part, d'éviter le paiement de la communication par l'utilisateur et d'autre part, de conserver le secret du numéro de téléphone de l'équipement appelant.

En effet, si le serveur décroche, comme cela se passe dans l'état de la technique, le numéro de téléphone de l'équipement appelant peut être récupéré et être usurpé par différents systèmes facilement accessibles dans l'état de la technique.

Lors de l'étape illustrée à la figure 3, le numéro de téléphone de l'équipement appelant est récupéré par le serveur d'accès distant 6 à travers son modem 7 et ce, toujours sans décrocher la ligne, de façon classique.

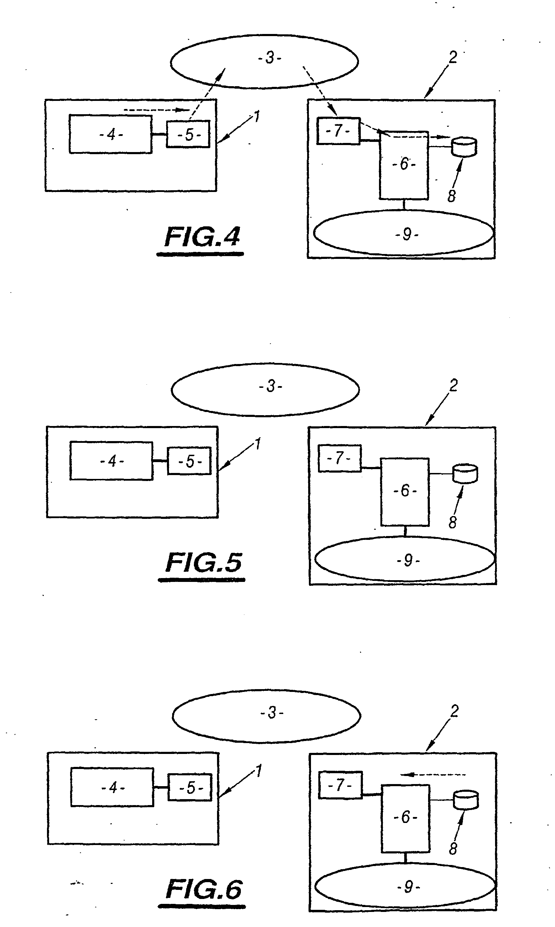

Lors de l'étape illustrée à la figure 4, le serveur d'accès distant 6 identifie les moyens d'appel en comparant le numéro de téléphone récupéré avec des informations contenues dans la base de données 8, celle-ci stockant des informations relatives à une table d'utilisateurs autorisés et à un ou plusieurs numéros de téléphone pré-enregistrés qui sont associés à ceux-ci.

Ceci permet de vérifier la validité de l'accès d'un utilisateur appelant.

Lors de la phase illustrée sur la figure 5, l'appel provenant de l'utilisateur est interrompu par exemple au bout d'une période de temps prédéterminée ou un nombre de x sonneries prédéterminé.

Le premier équipement c'est-à-dire en fait le premier micro-ordinateur mis à disposition de l'utilisateur, est alors en attente de réception d'un appel.

Lors de l'étape illustrée à la figure 6, l'utilisateur est déclaré valide par le serveur d'accès distant 6 et un numéro de téléphone de rappel associé à cet utilisateur est récupéré par le serveur d'accès 6 dans la base de données 8, à partir de la table correspondante, afin de déclencher le rappel du premier équipement.

On conçoit ainsi que ce rappel se fait à partir d'un numéro de téléphone stocké pour un utilisateur identifié dans la base de données associée au serveur.

On notera que ce processus permet d'une part, de n'appeler que des équipements identifiés et des utilisateurs validés et d'autre part, à cet utilisateur d'utiliser par exemple un équipement téléphonique différent du premier équipement informatique pour appeler le serveur.

Cet autre équipement téléphonique peut alors être affecté d'un numéro de téléphone différent du premier équipement informatique qu'il convient de connecter au serveur.

Le numéro de téléphone de l'équipement appelant n'est donc récupéré par le serveur RAS que pour des questions de validation d'accès et d'identification d'utilisateur et n'est pas utilisé comme numéro de rappel du premier équipement informatique.

Bien entendu, ces numéros de téléphone peuvent être identiques si l'utilisateur a déclenché l'appel du serveur à partir du micro-ordinateur que le serveur doit rappeler par la suite.

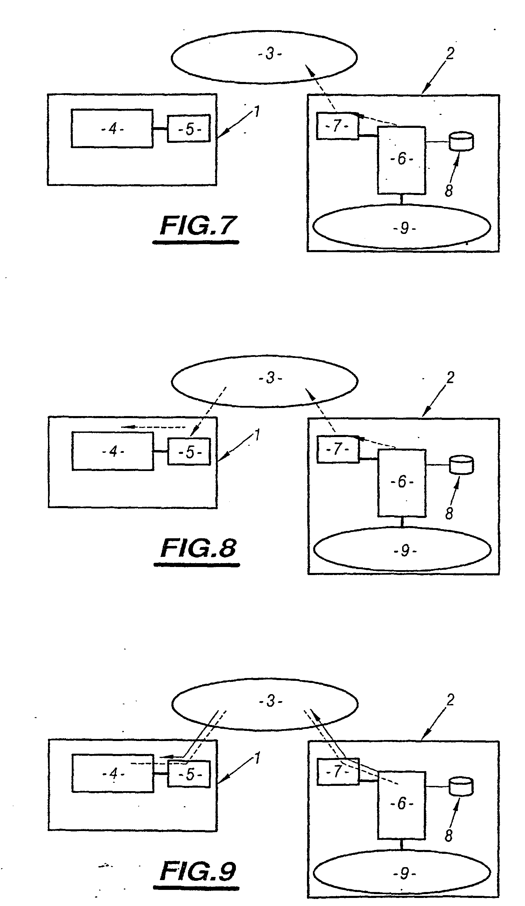

Lors de l'étape illustrée sur la figure 7, le serveur d'accès déclenche le rappel de l'utilisateur à travers le réseau téléphonique grâce à son modem.

Lors de l'étape illustrée sur la figure 8, le premier équipement reçoit l'appel en provenance du serveur et décroche la ligne.

Lors de l'étape illustrée sur la figure 9, des moyens d'échange d'informations de type classique entre les équipements sont activés pour permettre au serveur de demander à l'utilisateur un certain nombre d'informations d'identification et d'authentification, comme par exemple une information d'enregistrement de type « LOGIN » et un mot de passe de connexion pour définir les privilèges d'accès au système d'information.

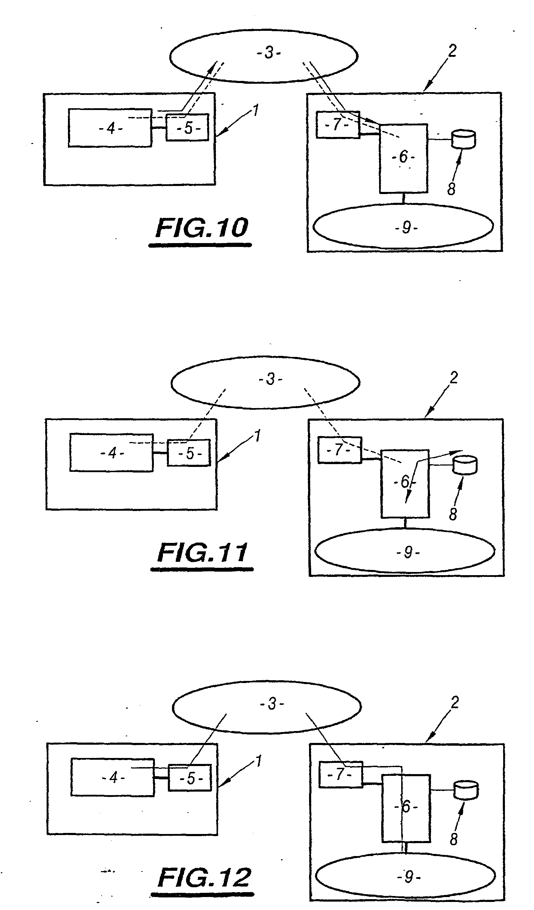

Lors des étapes illustrées sur les figures 10 et 11, l'utilisateur entre ces différentes informations dans le micro-ordinateur et celles-ci sont transmises à travers le réseau de télécommunication à destination du serveur.

On notera que ceci doit par exemple être réalisé dans une période de temps prédéterminée ou avec un nombre maximum de tentatives avant coupure de la communication par le serveur RAS.

Une fois ces informations recueillies au niveau du serveur d'accès distant 6, celui-ci vérifie ces informations en les comparant par exemple à des informations correspondantes de la base de données 8 et en attribuant des droits d'accès définis dans cette base pour cet utilisateur.

Ceci permet comme cela est illustré sur la figure 12, d'établir la connexion entre le premier et le second équipements, c'est-à-dire entre le micro-ordinateur et le système d'information.

Il va de soi bien entendu que d'autres modes de réalisation encore de ce système peuvent être envisagés.

C'est ainsi, comme cela a été indiqué précédemment, que l'appel du serveur peut être réalisé par l'utilisateur en mettant en oeuvre un équipement téléphonique différent du premier équipement à connecter.

Cet équipement peut par exemple être un téléphone fixe ou un téléphone mobile permettant d'activer le serveur d'accès distant et d'amener celui-ci après vérification, à utiliser un numéro de téléphone de rappel stocké dans la base de données pour rappeler le premier équipement informatique.

Une telle structure présente un certain nombre d'avantages notamment au niveau de la sécurité de la connexion.

En effet, il faut tout d'abord connaître le numéro de téléphone du serveur d'accès distant.

Le numéro de téléphone récupéré, c'est-à-dire celui correspondant à l'équipement appelant ne peut pas être falsifié avant le décroché de la ligne, car l'attribution de celui-ci est faite par l'opérateur du réseau téléphonique.

Si le numéro de téléphone de l'équipement appelant est masqué, le serveur d'accès distant ne peut pas réagir, car ce numéro lui est indispensable pour accéder à la base de données.

Il ne peut pas y avoir d'intrusion pour piratage de la base des utilisateurs du serveur d'accès distant, car ce serveur ne décroche pas la ligne. Il n'y a donc pas de liaison entre l'utilisateur et le serveur lors de cette phase d'authentification.

Ce serveur d'accès distant rappelle un numéro prédéfini de l'utilisateur et qui est stocké dans la base de données.

On conçoit alors que même si un utilisateur a réussi à usurper l'identité de quelqu'un d'autre, le serveur ne rappelle que le numéro qui est dans la base de données et non celui qui lui est présenté lors de l'appel. Ceci permet d'offrir des possibilités multiples d'appel pour l'authentification, par exemple à partir d'un téléphone portable et rappel du serveur sur une ligne téléphonique fixe associée au premier équipement.

Un niveau de sécurité supplémentaire est introduit avec les informations d'authentification, par exemple le mot de passe, pour donner l'accès au système d'information distant selon les privilèges d'accès définis au préalable dans la base de données d'utilisateurs.

Le fait de rajouter une temporisation prédéterminée permettant d'entrer ces informations d'identification, évite également la possibilité de tests multiples de différentes combinaisons en mettant en oeuvre par exemple un logiciel adéquat de piratage.

Ceci peut également être réalisé en limitant le nombre de tentatives d'entrée d'informations.

Enfin, l'utilisation d'un réseau privé virtuel peut également ajouter encore à la sécurité.

En effet, l'opérateur téléphonique peut mettre en place un réseau privé virtuel avec une numérotation sur la base d'un nombre de chiffres différent de celui utilisé dans le public.

## Revendications

1. Système de connexion de premier et second équipements informatiques (1,2) à travers un réseau (3) de télécommunication, un numéro de téléphone étant affecté à chacun de ces équipements, ce système comportant des premiers moyens (1) d'appel du second équipement, auxquels est affecté un numéro de téléphone, et le second équipement (2) comporte des moyens (6,7) de récupération du numéro de téléphone affecté aux premiers moyens d'appel sans décrocher la ligne, le second équipement comportant, en outre des moyens (6,8) d'identification des premiers moyens d'appel et de récupération dans une base de données (8) d'un numéro de téléphone préenregistré dans celle-ci et affecté au premier équipement (1) et des seconds moyens (6,7) d'appel du premier équipement par ce numéro à travers le réseau de télécommunication, pour permettre la connexion **caractérisé en ce que** les premiers moyens d'appel sont formés par un équipement téléphonique distinct du premier équipement (1) et raccordé au réseau téléphonique (3).

2. Système selon la revendication 1 **caractérisé en ce que** le premier et le second équipements (1,2) comportent des moyens (4,5,6,7,8) d'échange d'informations d'identification de l'utilisateur du premier équipement (1).

3. Système selon l'une quelconque des revendications précédentes, **caractérisé en ce que** le premier équipement comporte un micro-ordinateur (4) équipé d'un modem (5) et le second équipement comporte un serveur d'accès distant (6) à un système d'information (9), également équipé d'un modem.

## Claims

1. System for connecting a first and second computer equipments (1, 2) through a telecommunications network (3), a telephone number being assigned to each of these equipments, said system comprising first means (1) for calling the second equipment, to which a telephone number is assigned, and the second equipment (2) comprises means (6, 7) for retrieving the telephone number assigned to the first call means without taking the line off-hook, the second equipment furthermore comprising means (6, 8) for identifying the first call means and for retrieving, from a database (8), a telephone number pre-recorded in the latter and assigned to the first equipment (1), and second means (6, 7) for calling the first equipment via this number through the telecommunications network to enable the connection, **characterized in that** the first call means are formed by a telephone equipment different from the first equipment (1) and connected to the telephone network (3).

2. System according to claim 1, **characterized in that** the first and the second equipments (1, 2) comprise means (4, 5, 6, 7, 8) for exchanging information which identify the user of the first equipment (1).

3. System according to any one of the preceding claims, **characterized in that** the first equipment comprises a microcomputer (4) equipped with a modem (5), and the second equipment comprises a remote access server (6) to access an information system (9), similarly equipped with a modem.

## Patentansprüche

1. System zur Verbindung einer ersten und zweiten Datenverarbeitungsanlage (1, 2) über ein Telekommunikationsnetzwerk (3), bei dem jeder dieser Anlagen eine Telefonnummer zugewiesen ist, wobei dieses System erste Mittel (1) zum Anrufen der zweiten Anlage umfasst, denen eine Telefonnummer zugewiesen ist, und die zweite Anlage (2) Mittel (6, 7) zur Wiedergewinnung der Telefonnummer umfasst, die den ersten Mitteln zum Anrufen zugewiesen ist, ohne die Leitung abheben zu müssen, wobei die zweite Anlage außerdem Mittel (6, 8) zur Identifikation der ersten Mittel zum Anrufen und zur Wiedergewinnung einer Telefonnummer in einer Datenbank (8) umfasst, die in dieser vorregistriert ist und der ersten Anlage (1) zugewiesen ist, und zweite Mittel (6, 7) zum Anrufen der ersten Anlage durch diese Nummer über das Telekommunikationsnetz, um die Verbindung zu ermöglichen, **dadurch gekennzeichnet, dass** die ersten Mittel zum Anrufen durch eine Telefonanlage gebildet werden, die von der ersten Anlage (1) verschieden ist und mit dem Telefonnetz verbunden ist (3).

2. System nach Anspruch 1, **dadurch gekennzeichnet, dass** die erste und die zweite Anlage (1, 2) Mittel (4, 5, 6, 7, 8) zum Austausch von Identifikationsinformationen des Nutzers der ersten Anlage (1) umfassen.

3. System nach einem der vorausgehenden Ansprüche, **dadurch gekennzeichnet, dass** die erste Anlage einen Mikrocomputer (4) umfasst, der mit einem Modem (5) ausgestattet ist, und die zweite Anlage einen Fernzugangsserver (6) eines Informationssystems (9) umfasst, das ebenfalls mit einem Modem ausgestattet ist.
